# EUROPÄISCHE PATENTANMELDUNG

(11) **EP 1 247 444 A2**
(43) Veröffentlichungstag der Anmeldung: **09.10.2002**
(21) Anmeldenummer: 02003093.8
(22) Anmeldetag: 13.02.2002
(51) Int. Cl.: A01G 17/02, C09K 17/22

(54) **Verfahren zur Herstellung von Wein**

(30) Priorität: 02.04.2001 DE 10116442
(71) Anmelder: Degussa AG, 40474 Düsseldorf (DE)
(72) Erfinder: Pangratz, Johann-Joachim, 46286 Dorsten (DE)

(57) **Zusammenfassung**

Verfahren zur Herstellung von Wein, wobei der Boden zur Pflanzung vorbereitet wird, die Rebstöcke gepflanzt und bewässert, die Trauben gelesen und gekeltert werden, der so erhaltene Most vergoren, zum Wein ausgebaut und der Wein in Gebinde abgefüllt wird, wobei beim Weinanbau in den Boden ein Superabsorber eingebracht wird.

## Beschreibung

Die Erfindung betrifft ein Verfahren zur Herstellung von Wein, wobei der Boden zur Pflanzung vorbereitet wird, die Rebstöcke gepflanzt und bewässert, die Trauben gelesen und gekeltert werden, der so erhaltene Most vergoren, zum Wein ausgebaut und der Wein in Gebinde abgefüllt wird.

Des weiteren betrifft die Erfindung ein Verfahren zum Erzeugen von Weintrauben durch Weinanbau, wobei der Boden zur Pflanzung vorbereitet wird, die Rebstöcke gepflanzt und bewässert und die Trauben gelesen werden.

Außerdem betrifft die Erfindung ein Verfahren zur Wasserversorgung von Rebstöcken im Weinanbau.

Das Verfahren zur Herstellung von Wein vom Weinanbau bis zur Abfüllung des Weines in Gebinde stellt sich wie folgt dar:

Nach gegebenenfalls notwendiger Bodenvorbereitung, wie Einebnen, Tiefpflügen (Rigolen), Pflügen und Auszeilen, d. h. Festlegung des Stock- und Zeilenabstandes in Abhängigkeit von der Geländeform, erfolgt das Setzen der Pfropfreben von Hand in vorbereitete Pflanzlöcher oder automatisch von einer Pflanzmaschine in von dieser vorbereitete Bohrlöcher. Damit ein gutes Anwachsen und das Ausbilden eines lebensfähigen Wurzelballens gewährleistet ist, müssen die Reben während oder unmittelbar nach dem Setzen, gegebenenfalls auch wiederholt über einen längeren Zeitraum, bewässert werden, damit diese nicht vertrocknen (siehe B. Götz, Weinbau, Stuttgart 1987).

Nach dem Setzen der Reben kann bei normalem Vegetationsverlauf im dritten Jahr nach der Neuanpflanzung mit dem ersten Ertrag gerechnet werden. Dazu werden im Frühjahr vor dem Austrieb die Reben in geeigneter Weise geschnitten, nach dem Austrieb an unterstützende Drahtrahmen gebunden und die je nach Rebsorte zwischen August und Oktober reifen Trauben gelesen (abgeerntet). Die gelesenen Trauben werden gemahlen, gekeltert (ausgepresst) und der ausgepresste Most (Traubensaft), gegebenenfalls unter Zugabe von Reinzuchthefe, vergoren. Im Falle der Herstellung von Rotwein erfolgt die Vergärung nach dem Mahlen (auf der Maische). Das Keltern findet nach der Vergärung statt. Dann erfolgt der Weinausbau durch Vergärung, Abstechen (Separieren) von der Hefe und gegebenenfalls Zusatz von Süßreserve, d. h. unvergorenem Most zur Einstellung des Restzuckergehaltes. Nach dem Weinausbau wird der fertige Wein in Gebinde wie Flaschen oder Fässer abgefüllt, die dann verkauft werden können.

Besonderes Augenmerk ist beim Herstellungsverfahren von Wein auf eine ausreichende Bewässerung der Rebstöcke zu richten.

So erfordern Neuanlagen im Weinbau in den ersten Monaten und Jahren eine ausreichende Versorgung mit Wasser, um die für die Ausbildung des Wurzelwerks notwendige Nährstoffversorgung zu gewährleisten.

Bleiben die dafür erforderlichen Regenfälle nach der Pflanzung aus - dieses ist die Regel in Gebieten mit < 400 mm Niederschlag pro Jahr - muss aufwendig bewässert werden, was jedoch auch nur in Gegenden möglich ist, wo ausreichend Oberflächenwasser, z. B. aus einem Fluss oder See, zur Verfügung steht.

Auch bei Ertragsanlagen im Weinbau sollte eine ausreichende Wasserversorgung gewährleistet sein.

Neben der natürlichen Bewässerung durch Regen, die jedoch nur in ausreichend feuchten Jahren für die wiederholte Bewässerung nach dem Setzen der Pfropfreben ausreichend ist, kommt sowohl für Neuanlagen als auch für Ertragsanlagen eine flächige Bewässerung durch Beregnungsanlagen mittels Rohrleitungssystemen oder Einzelstockbewässerung durch Tröpfchenbewässerung über Schlauchsysteme in Frage. Beide Verfahren setzen jedoch wegen der begrenzten Länge der verwendeten Rohrsysteme eine ausreichende Versorgung durch in unmittelbarer Nähe befindliche Wasservorräte, wie z. B. ein Fluss oder ein See, voraus. Ist das nicht gegeben, muss Einzelstockbewässerung von Hand aus Transportbehältern, die in den Weinberg gefahren werden, erfolgen.
Ertragsanlagen lassen im Laufe der Nutzungsdauer in der Ertragsmenge nach, was auf Mangelversorgung mit Wasser und dadurch bedingt Mangelversorgung mit Nährstoffen zurückgeführt wird.

Da eine künstliche Bewässerung, wie oben dargelegt, sehr aufwendig ist, werden nach traditioneller Weise die Ertragsanlagen gerodet und durch Neuanlagen ersetzt, was hohe Investitionskosten erfordert.

Auch bei Neuanlagen ist eine künstliche Bewässerung, wie oben beschrieben, sehr aufwendig und kostenintensiv.

Der Erfindung liegt daher die Aufgabe zugrunde, ein Verfahren zur Herstellung von Wein zu entwickeln, bei dem die Neuanlagen vor Trockenschäden in Anbaugebieten mit geringen Niederschlagsmengen geschützt werden und die Wasserversorgung von Ertragsanlagen zur Verlängerung der Nutzungsdauer bei Auftreten von Trockenstress im höheren Alter der Rebanlagen verbessert wird.

Es wurde nun überraschenderweise gefunden, dass durch Einbringen von Superabsorber in den Boden bei Neuanlagen die Gefahr der Vertrocknung der frisch gepflanzten Rebstöcke erheblich verringert und bei Ertragsanlagen die Nutzungsdauer wegen der verbesserten Wasser- und Nährstoffversorgung erheblich verlängert wird, was die notwendigen Ersatzinvestitionen um den entsprechenden Zeitraum verschiebt.

Gegenstand der vorliegenden Erfindung ist daher ein Verfahren zur Herstellung von Wein, wobei der Boden zur Pflanzung vorbereitet wird, die Rebstöcke gepflanzt und bewässert, die Trauben gelesen und gekeltert werden, der so erhaltene Most vergoren, zum Wein ausgebaut und der Wein in Gebinde abgefüllt wird, das dadurch gekennzeichnet ist, dass beim Weinanbau in den Boden ein Superabsorber eingebracht wird.

Des weiteren ist Gegenstand der vorliegenden Erfindung ein Verfahren zum Erzeugen von Weintrauben durch Weinanbau, wobei der Boden zur Pflanzung vorbereitet wird, die Rebstöcke gepflanzt und bewässert und die Trauben gelesen werden, das dadurch gekennzeichnet ist, dass in den Boden ein Superabsorber eingebracht wird.

Außerdem ist Gegenstand der vorliegenden Erfindung ein Verfahren zur Wasserversorgung von Rebstöcken im Weinanbau, das dadurch gekennzeichnet ist, dass in den Boden ein Superabsorber eingebracht wird.

Darüber hinaus sind Gegenstand der vorliegenden Erfindung die Verwendung von einem Superabsorber im Verfahren zum Anbau von Wein sowie die Verwendung der erfindungsgemäß erzeugten Weintrauben zur Herstellung von Rosinen und die Verwendung der erfindungsgemäß erzeugten Weintrauben zur Herstellung von Korinthen.

Superabsorber sind solche chemischen Substanzen, die größere Mengen an Wasser aufzunehmen bzw. zu speichern und wieder freizusetzen vermögen.

Für das erfindungsgemäße Verfahren können alle Superabsorber nach dem Stand der Technik eingesetzt werden, z. B. auch Copolymere von Acrylssäurederivaten. Im Handel werden die verschiedensten Superabsorber angeboten, beispielsweise sind als Superabsorber vernetzte oder unvernetzte Acrylamid-Acrylsäure-Copolymere, wobei die Acrylsäure ggf. auch als Kalium- oder Ammoniumsalz vorliegen kann, gut geeignet, z.B. das Produkt STOCKOSORB® AGRO der Fa. Stockhausen, Krefeld.

Ebenfalls geeignet sind u. a. die Produkte HySorb® der Fa. BASF, Ludwigshafen.

So können geeignete Mengen an Superabsorber beispielsweise entweder flächig als Granulat bei der Bodenvorbereitung vor der Pflanzung oder durch Injektion einer wässrigen Superabsorbersuspension mittels Lanzensystem in den Wurzelbereich nach der Pflanzung eingebracht werden, wodurch sich die Gefahr der Vertrocknung sehr stark verringert.

Wenn der Supersabsorber nach 4 bis 5 Jahren im Boden abgebaut ist, haben die Jungpflanzen bereits ein ausreichend dichtes und tiefreichendes Wurzelwerk ausgebildet, dass in der Regel die notwendige Wasserversorgung auch ohne Superabsorber gewährleistet ist.

Vorzugsweise wird im erfindungsgemäßen Verfahren die Erde mit dem Superabsorber vermengt, besonders vorzugsweise wird die Erde mit Superabsorber-Granulat vermengt.

Es kann hierbei auch das Superabsorber-Granulat im Boden untergepflügt werden.

Eine andere Variante ist, dass ein Pflanzloch ausgehoben, in dieses Loch eine Mischung aus Superabsorber-Granulat und Erde eingefüllt und der Rebstock hierin eingepflanzt wird.

Als weitere Variante kann der Superabsorber als wässrige Suspension in den Boden eingebracht werden.

Hierbei kann bevorzugt eine wässrige Superabsorber-Suspension mittels eines Lanzensystems in den Boden eingebracht werden. Diese Verfahrensvariante wird insbesondere bei Ertragsanlagen angewendet. Als Lanzensystem können beispielsweise die im Weinbau üblichen von Traktoren gezogenen Spritzgeräte zur Ausbringung wässriger Lösungen von Pflanzenschutzmitteln eingesetzt werden. Diese Spritzgeräte verfügen über eine Pumpe, die in der Lage ist, einen Druck von bis zu 40 bar oder mehr aufzubauen. An der Druckseite einer solchen Pumpe kann über einen Schlauch ein etwa 1,5 Meter langes Rohr mit Düse am Ende und ein Handhebelventil zur Freigabe des Wasserflusses angeschlossen werden. Mit diesem Wasserdruck kann eine wässrige Suspension von Superabsorber in geeignete Tiefe des Weinbergbodens gedrückt werden.

Geeigneterweise sollte der Superabsorber im Wurzelbereich der Rebstöcke in den Boden eingebracht werden.

Vorzugsweise wird der Superabsorber in Mengen von 1 kg bis 10 kg pro m³ Erde in den Boden eingebracht.

Das erfindungsgemäße Verfahren kann sowohl bei Neuanlagen wie auch bei Ertragsanlagen angewendet werden.

Somit kann also bei Neuanlagen zum Weinanbau in den Boden ein Superabsorber eingebracht und ebenso bei Ertragsanlagen zum Weinanbau in den Boden ein Superabsorber eingebracht werden.

Die Erfindung wird durch die folgenden Beispiele näher erläutert.

### Beispiel 1

Erfindungsgemäß wird bei der Neuanlage eines Weinbergs während der Bodenvorbereitung der Superabsorber STOCKOSORB® AGRO der Firma Stockhausen, Krefeld, in einer Menge von 3 kg pro m³ Erde im Boden untergepflügt. Hierdurch werden die natürlichen Niederschläge (Regen) oder die gegebenenfalls notwendigen, künstlich zugeführten Wassermengen durch Beregnung oder sonstiges Einbringen von Wasser im Wurzelbereich der Reben am Superabsorber gespeichert, so dass das Wasser nicht mehr wegen des mangelnden Speicherpotentials des Bodens ins Grundwasser abläuft, sondern den Reben zur Verfügung steht. Ein Vergleich mit einer gleich großen Nachbarparzelle, bei der kein Superabsorber in den Boden eingebracht worden ist, ergibt, dass bei Anwendung des erfindungsgemäßen Verfahrens ca. 30 %, weniger Rebstöcke vertrocknen bzw. in der Nachbarparzelle ohne Superabsorber im Boden ein entsprechend höherer zusätzlicher Bewässerungsaufwand getrieben werden muss, um im gleichen Maß wie oben ein Vertrocknen der Rebstöcke zu verhindern.

### Beispiel 2

Eine Ertragsrebenanlage muss nach etwa 20 bis 25 Jahren gerodet und durch eine Neuanlage ersetzt werden, weil der Ertrag an Trauben pro Hektar dann häufig unter die Wirtschaftlichkeitsgrenze gefallen ist. Die Anlage eines neuen Weinbergs ist eine kostspielige Investition, die um 4 bis 5 Jahre hinausgeschoben werden kann, wenn der Superabsorber STOCKOSORB® AGRO der Firma Stockhausen, Krefeld in einer Menge von 3 kg pro m³ Erde als wässrige Suspension mittels eines Lanzensystems in den Wurzelbereich der Ertragsrebstöcke eingebracht wird.

## Patentansprüche

1. Verfahren zur Herstellung von Wein, wobei der Boden zur Pflanzung vorbereitet wird, die Rebstöcke gepflanzt und bewässert, die Trauben gelesen und gekeltert werden, der so erhaltene Most vergoren, zum Wein ausgebaut und der Wein in Gebinde abgefüllt wird,
**dadurch gekennzeichnet,**
**dass** beim Weinanbau in den Boden ein Superabsorber eingebracht wird.

2. Verfahren nach Anspruch 1,
**dadurch gekennzeichnet,**
**dass** die Erde mit dem Superabsorber vermengt wird.

3. Verfahren nach Anspruch 2,
**dadurch gekennzeichnet,**
**dass** die Erde mit Superabsorber-Granulat vermengt wird.

4. Verfahren nach Anspruch 3,
**dadurch gekennzeichnet,**
**dass** das Superabsorber-Granulat im Boden untergepflügt wird.

5. Verfahren nach Anspruch 3,
**dadurch gekennzeichnet,**
**dass** ein Pflanzloch ausgehoben, in dieses Loch eine Mischung aus Superabsorber-Granulat und Erde eingefüllt und der Rebstock hierin eingepflanzt wird.

6. Verfahren nach Anspruch 2,
**dadurch gekennzeichnet,**
**dass** der Superabsorber als wässrige Suspension in den Boden eingebracht wird.

7. Verfahren nach Anspruch 6,
**dadurch gekennzeichnet,**
**dass** eine wässrige Superabsorber-Suspension mittels eines Lanzensystems in den Boden eingebracht wird.

8. Verfahren nach den Ansprüchen 1 bis 7,
**dadurch gekennzeichnet,**
**dass** der Superabsorber im Wurzelbereich der Rebstöcke in den Boden eingebracht wird.

9. Verfahren nach den Ansprüchen 1 bis 8,
**dadurch gekennzeichnet,**
**dass** der Superabsorber in Mengen von 1 bis 10 kg pro m³ Erde in den Boden eingebracht wird.

10. Verfahren nach den Ansprüchen 1 bis 9,
**dadurch gekennzeichnet,**
**dass** bei Neuanlagen zum Weinanbau in den Boden ein Superabsorber eingebracht wird.

11. Verfahren nach den Ansprüchen 1, 2, 3, 4, 6, 7, 8 und 9,
**dadurch gekennzeichnet,**
**dass** bei Ertragsanlagen zum Weinanbau in den Boden ein Superabsorber eingebracht wird.

12. Verfahren zum Erzeugen von Weintrauben durch Weinanbau, wobei der Boden zur Pflanzung vorbereitet wird, die Rebstöcke gepflanzt und bewässert und die Trauben gelesen werden,
**dadurch gekennzeichnet,**
**dass** in den Boden ein Superabsorber eingebracht wird.

13. Verfahren nach Anspruch 12,
**dadurch gekennzeichnet,**
**dass** die Erde mit dem Superabsorber vermengt wird.

14. Verfahren nach Anspruch 13,
**dadurch gekennzeichnet,**
**dass** die Erde mit Superabsorber-Granulat vermengt wird.

15. Verfahren nach Anspruch 14,
**dadurch gekennzeichnet,**
**dass** das Superabsorber-Granulat im Boden untergepflügt wird.

16. Verfahren nach Anspruch 14,
**dadurch gekennzeichnet,**
**dass** ein Pflanzloch ausgehoben, in dieses Loch eine Mischung aus Superabsorber-Granulat und Erde eingefüllt und der Rebstock hierin eingepflanzt wird.

17. Verfahren nach Anspruch 13,
**dadurch gekennzeichnet,**
**dass** der Superabsorber als wässrige Suspension in den Boden eingebracht wird.

18. Verfahren nach Anspruch 17,
**dadurch gekennzeichnet,**
**dass** eine wässrige Superabsorber-Suspension mittels eines Lanzensystems in den Boden eingebracht wird.

19. Verfahren nach den Ansprüchen 12 bis 18,
**dadurch gekennzeichnet,**
**dass** der Superabsorber im Wurzelbereich der Rebstöcke in den Boden eingebracht wird.

20. Verfahren nach den Ansprüchen 12 bis 19,
**dadurch gekennzeichnet,**
**dass** der Superabsorber in Mengen von 1 bis 10 kg pro m³ Erde in den Boden eingebracht wird.

21. Verfahren nach den Ansprüchen 12 bis 20,
**dadurch gekennzeichnet,**
**dass** bei Neuanlagen zum Weinanbau in den Boden ein Superabsorber eingebracht wird.

22. Verfahren nach den Ansprüchen 12, 13, 14, 15, 17, 18, 19 und 20,
**dadurch gekennzeichnet,**
**dass** bei Ertragsanlagen zum Weinanbau in den Boden ein Superabsorber eingebracht wird.

23. Verfahren zur Wasserversorgung von Rebstöcken im Weinanbau,
**dadurch gekennzeichnet,**
**dass** in den Boden ein Superabsorber eingebracht wird.

24. Verfahren nach Anspruch 23,
**dadurch gekennzeichnet,**
**dass** die Erde mit dem Superabsorber vermengt wird.

25. Verfahren nach Anspruch 24,
**dadurch gekennzeichnet,**
**dass** die Erde mit Superabsorber-Granulat vermengt wird.

26. Verfahren nach Anspruch 25,
**dadurch gekennzeichnet,**
**dass** das Superabsorber-Granulat im Boden untergepflügt wird.

27. Verfahren nach Anspruch 25,
**dadurch gekennzeichnet,**
**dass** ein Pflanzloch ausgehoben, in dieses Loch eine Mischung aus Superabsorber-Granulat und Erde eingefüllt und der Rebstock hierin eingepflanzt wird.

28. Verfahren nach Anspruch 24,
**dadurch gekennzeichnet,**
**dass** der Superabsorber als wässrige Suspension in den Boden eingebracht wird.

29. Verfahren nach Anspruch 28,
**dadurch gekennzeichnet,**
**dass** eine wässrige Superabsorber-Suspension mittels eines Lanzensystems in den Boden
eingebracht wird.

30. Verfahren nach den Ansprüchen 23 bis 29,
**dadurch gekennzeichnet,**
**dass** der Superabsorber im Wurzelbereich der Rebstöcke in den Boden eingebracht wird.

31. Verfahren nach den Ansprüchen 23 bis 30,
**dadurch gekennzeichnet,**
**dass** der Superabsorber in Mengen von 1 bis 10 kg pro m³ Erde in den Boden eingebracht wird.

32. Verfahren nach den Ansprüchen 23 bis 31,
**dadurch gekennzeichnet,**
**dass** bei Neuanlagen zum Weinanbau in den Boden ein Superabsorber eingebracht wird.

33. Verfahren nach den Ansprüchen 23, 24, 25, 26, 28, 29, 30 und 31,
**dadurch gekennzeichnet,**
**dass** bei Ertragsanlagen zum Weinanbau in den Boden ein Superabsorber eingebracht wird.

34. Verwendung von einem Superabsorber im Verfahren zum Anbau von Wein

35. Verwendung der gemäß Anspruch 12 erzeugten Weintrauben zur Herstellung von Rosinen.

36. Verwendung der gemäß Anspruch 12 erzeugten Weintrauben zur Herstellung von Korinten.
